(19) Europäisches Patentamt

European Patent Office

Office européen des brevets

(11) **EP 0 928 975 B1**

(12) **FASCICULE DE BREVET EUROPEEN**

(45) Date de publication et mention
de la délivrance du brevet:
**26.10.2005 Bulletin 2005/43**

(51) Int Cl.⁷: **G01T 1/29**

(21) Numéro de dépôt: **98403123.7**

(22) Date de dépôt: **10.12.1998**

(54) **Procédé de traitement d'image d'autoradiographie**

Verfahren zur Verarbeitung autoradiographischer Aufzeichnungen

Method of processing autoradiographic images

(84) Etats contractants désignés:
**DE GB**

(30) Priorité: **12.12.1997 FR 9715764**

(43) Date de publication de la demande:
**14.07.1999 Bulletin 1999/28**

(73) Titulaire: **BIOSPACE INSTRUMENTS**
**75013 Paris (FR)**

(72) Inventeurs:
• **Maitrejean, Serge**
**75020 Paris (FR)**
• **Sandkamp, Bernhard**
**75005 Paris (FR)**
• **Hennion, Claude**
**75013 Paris (FR)**

(74) Mandataire: **Burbaud, Eric**
**Cabinet Plasseraud**
**65/67 rue de la Victoire**
**75440 Paris Cedex 09 (FR)**

(56) Documents cités:
**EP-A- 0 377 095    EP-A- 0 615 274**
**GB-A- 2 311 198**

**Description**

La présente invention est relative aux procédés de traitement d'images d'autoradiographie (autoradiographie proprement dite en rayonnement β, scintigraphie en rayonnement γ, etc.), c'est à dire aux procédés permettant d'obtenir au moins une image à partir des rayonnements radioactifs émis par au moins un traceur radioactif contenu dans un substrat.

Plus particulièrement, l'invention concerne un procédé pour générer au moins une image d'un substrat à partir de rayonnements radioactifs provenant d'un nombre I au moins égal à 2 de sources radioactives, ces sources radioactives comprenant au moins un traceur radioactif contenu dans le substrat, ce procédé comprenant les étapes suivantes :

a) on détecte les rayonnements radioactifs issus du substrat dans un certain champ d'observation subdivisé en K $\times$ L pixels, au moyen d'un détecteur qui génère pour chaque pixel $(x_k, y_l)$ du champ d'observation un signal de détection $f(x_k, y_l)$ représentatif de la détection ou non d'un rayonnement radioactif en ce pixel,

b) et on mémorise des données représentatives des différents signaux de détection générés par le détecteur, individuellement pour chaque rayonnement radioactif détecté pendant une durée déterminée dite période d'observation, ces données mémorisées permettant de connaître au moins une position estimée d'un point d'émission du rayonnement radioactif dans le substrat.

On a déjà proposé d'utiliser un procédé de ce type pour générer, en utilisant un appareil d'imagerie à scintillateur solide (commercialisé sous la marque "μ-imager" par la société BIOSPACE MESURES, Paris, France), deux images correspondant respectivement à la répartition dans le substrat de deux traceurs différents ($^{35}$S et $^{32}$P) émettant des rayonnements de spectre énergétiques différents : en utilisant des critères de séparation de ces rayonnements (tels que le nombre de pixels concernés par une détection, l'amplitude maximale du signal de détection pour une détection, la somme des amplitudes des signaux de détection pour une même détection, etc.), on classe alors sensiblement en temps réel chaque détection comme correspondant soit à un traceur, soit à l'autre (voir la thèse de P. Laniece : "Quantification en hybridation in situ et en autoradiographie : développement d'un radio-imageur haute résolution", Institut de Physique Nucléaire, 1992 et Y. Charon : "Radio-imagerie et biologie", thèse de l'Université Denis Diderot - Paris VII, 1995).

Dans ce cas, on estime également, sensiblement en temps réel, le point d'émission de chaque rayonnement détecté, en même temps qu'on attribue ce rayonnement à l'un ou à l'autre des traceurs, et chacune des images finalement générées consiste simplement en la superposition des points d'émission estimés des différents rayonnements détectés, respectivement pour chaque traceur.

GB-A-2 311 198 décrit un procédé similaire. Dans ce procédé, pendant la période d'observation on mémorise la position estimée du point d'émission du rayonnement, et un paramètre numérique supplémentaire, qui est l'énergie de ce rayonnement. Néanmoins, à partir de cette énergie, on ne peut pas déterminer avec certitude par quel type de particule est émis ce rayonnement, par exemple dès lors que les types de particules en question ont des spectres d'émission non disjoints.

La présente invention a notamment pour but de perfectionner les procédés connus du type susmentionné pour améliorer la définition de l'image.

A cet effet, selon l'invention, un procédé du genre en question est essentiellement caractérisé en ce que les données mémorisées pendant la période d'observation permettent en outre de connaître, en plus de la position estimée $(x_k, y_l)$ du point d'émission du rayonnement, un nombre q au moins égal à 1 de paramètres numériques supplémentaires A1..Aq relatifs aux signaux de détection générés par chaque détection de rayonnement radioactif, chacun de ces paramètres, dits "critères", pouvant prendre un nombre non nul de valeurs $A1_1..Al_{J1}, .., Aq_1..Aq_{Jq}$, dites "caractéristiques",

en ce qu'avant la période d'observation (une fois pour toutes, à intervalle de temps régulier, ou avant chaque nouvelle période d'observation ou série de périodes d'observation), on met en oeuvre une étape préliminaire de calibration, dans laquelle on mesure une réponse impulsionnelle $Ri,j1,..jq(x,y)$ du détecteur pour chaque source radioactive i et pour chaque combinaison possible des caractéristiques $A1_{j1},..,Aq_{jq}$ des différents critères A1..Aq, cette réponse impulsionnelle correspondant à une probabilité pour que, lorsque le détecteur reçoit un rayonnement provenant d'une source ponctuelle de la source radioactive susmentionnée, ledit détecteur génère sur les pixels du champ d'observation ayant les coordonnées relatives (x, y) par rapport à la source ponctuelle, un signal de détection présentant ladite combinaison de caractéristiques,

et en ce que ledit procédé comporte les étapes supplémentaires suivantes :

c) à partir de l'ensemble des données mémorisées, déterminer une distribution $H(x_k, y_l, A1_{j1},..,Aq_{jq})$ des détections correspondant à ces données, correspondant au nombre de détections en chaque point d'émission estimé de coordonnées $(x_k, y_l)$ avec chaque combinaison $A1_{j1},..,Aq_{jq}$ des caractéristiques des différents critères,

d) et estimer une distribution $\widetilde{h}\,i(xk,yl)$ des détections correspondant à chaque source radioactive i, qui minimise les écarts respectifs entre la distribution $H(x_k,y_l,A_{j1},..,A_{jq})$ et les valeurs correspondantes :

$$\widetilde{H}(xk, yl, A1j1,.. Aqjq) = \sum_{i} \widetilde{h}\,i(xk, yl) \otimes Ri, j1,.. jq(x,y) \,,$$

où :

$$\widetilde{h}\,i(xk, yl) \otimes Ri, j1,.. jq(x,y) = \sum_{m} \sum_{n} \widetilde{h}\,i(xk, yl). Ri, j1,.. jq(xk - xm, yl - yn) \,,$$

- i étant un entier compris entre 1 et I, et désignant la source radioactive considérée,
- j1 étant un entier compris entre 1 et J1, désignant la j1$^{ème}$ caractéristique possible pour le critère n°1,
  ...
- jq étant un entier compris entre 1 et Jq, désignant la jq$^{ème}$ caractéristique possible pour le critère n°q,
- m étant un indice compris entre 1 et L,
- n étant un indice compris entre 1 et K,

les distributions $\widetilde{h}\,i(xk,yl)$ correspondant, pour chaque source radioactive i constituée par un traceur contenu dans le substrat, à l'image de la répartition de ce traceur dans ledit substrat.

Grâce à ces dispositions, on prend en compte toute l'information contenue dans l'historique des détections effectuées pendant la période d'observation, pour obtenir une image d'excellente résolution.

Dans des modes de réalisation préférés de l'invention, on peut éventuellement avoir recours en outre à l'une et/ou à l'autre des dispositions des revendications dépendantes.

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 est une vue schématique d'un détecteur gazeux pouvant être utilisé pour la mise en oeuvre du procédé selon l'invention,
- la figure 2 est une vue schématique d'un exemple de signal de détection $f(x_k,y_l)$ obtenu lors de la détection d'un rayonnement $\beta$ dans le détecteur de la figure 1,
- et la figure 3 est une vue schématique d'un exemple de réponse impulsionnelle $Ri,j1,..jq(x,y)$ utilisable dans la mise en oeuvre du procédé selon l'invention.

Le procédé selon la présente invention s'applique au traitement des images d'autoradiographie, obtenue notamment par les détecteurs de scintigraphie en rayonnements $\gamma$, et les détecteurs d'autoradiographie proprement dite en rayonnements $\beta$, qu'il s'agisse de détecteurs gazeux à lecture électronique (chambre à fils), de détecteurs gazeux à lecture optique (par exemple, les détecteurs commercialisés sous la marque "β-Imager" par la So-ciété BIOSPACE MESURES, PARIS, FRANCE), ou de scintillateurs (par exemple, le détecteur utilisant un scintillateur solide et commercialisé sous la marque "μ-imager" par la Société BIOSPACE MESURES, PARIS, FRANCE), etc.

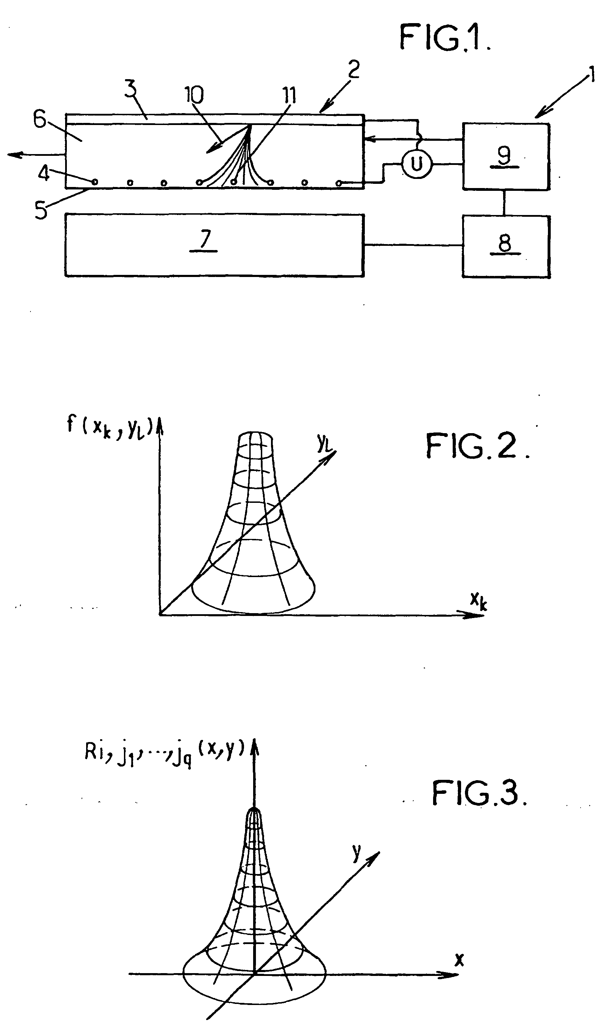

A titre d'exemple purement illustratif, un détecteur gazeux à lecture optique, du type de celui commercialisé sous la marque "β-Imager" par la Société BIOSPACE susmentionnée, est représenté sur la figure 1.

Ce détecteur 1 comporte :

- une chambre de détection 2, constituée par une enceinte fermée délimitée entre deux électrodes plates parallèles, constituées l'une par un échantillon 3 à analyser et l'autre par une grille 4 accolée à une fenêtre transparente 5, ces deux électrodes étant soumises à une différence de potentiel élevée et l'espace entre les deux électrodes (ou champ d'observation) étant parcouru par un flux gazeux constitué par exemple par un mélange d'argon et de triéthylamine,
- une caméra intensifiée 7 disposée en face de la fenêtre 5 de la chambre de détection,
- un microordinateur 8 relié à la caméra intensifiée pour acquérir les images prises par cette caméra,
- et un système de contrôle 9 commandé par le microordinateur, pour contrôler notamment le flux gazeux dans la chambre de détection 2 ainsi que la différence de potentiel entre l'échantillon 3 et la grille 4.

L'échantillon 3, qui sera appelé ci-après substrat, peut par exemple être constitué par une fine lamelle d'un organisme biologique dans lequel on souhaite cartographier la répartition d'un ou plusieurs traceurs (au nombre de I) constitués par des isotopes radioactifs tels que :

$^3$H, $^{14}$C, $^{35}$S, $^{32}$P, $^{33}$P et $^{125}$I.

En supposant par exemple que le substrat contienne deux isotopes, par exemple du tritium et du carbone 14, ces deux traceurs émettent chacun des rayonnements $\beta$ dans le champ de détection 6, avec des spectres énergétiques différents.

Chaque rayonnement $\beta$ 10 ionise des atomes d'argon dans le champ de détection, et les électrons ainsi libérés sont accélérés par le champ électrique entre les deux électrodes 3,4 en ionisant à leur tour d'autres atomes d'argon, ce qui génère un phénomène appelé "avalanche électronique" 11.

Cette avalanche électronique excite le triéthylamine contenu dans le flux gazeux, qui émet de la lumière détectée par la caméra intensifiée 7, et le microordinateur 8 acquiert ainsi l'image de chaque détection de rayonnement $\beta$, répartie en K x L pixels.

Chaque pixel de l'image ainsi acquise a donc des coordonnées $(x_k, y_l)$, ou k est un entier compris entre 1 et K et l est un entier compris entre 1 et L.

Ainsi, chaque détection d'un rayonnement $\beta$ par le détecteur 2 se traduit par l'acquisition dans le microordinateur 8, d'une image dont quelques pixels, par exemple une cinquantaine de pixels, présentent une intensité lumineuse supérieure à un seuil prédéterminé, ces pixels formant une tache de détection.

L'intensité lumineuse de chaque pixel, captée par la caméra 7, constitue un signal de détection $f(x_k, y_l)$, dont un exemple purement illustratif est représenté sur la figure 2.

Chaque image de détection de rayonnement $\beta$ acquise par le microordinateur 8 correspond soit à un rayonnement émis par le tritium, soit à un rayonnement émis par le carbone 14.

Du fait des spectres énergétiques différents de ces deux traceurs radioactifs, la forme de la fonction $f(x_k, y_l)$ susmentionnée varie statistiquement suivant si le rayonnement émis provient du tritium ou du carbone 14.

C'est ce phénomène qui est utilisé par la présente invention pour cartographier séparément le tritium et le carbone 14 dans le substrat 3, c'est-à-dire pour générer deux images du substrat 3, correspondant l'une à la répartition du tritium dans ce substrat, et l'autre à la répartition du carbone 14 dans ce substrat.

A cet effet, on utilise un ou plusieurs critères de distinction relativement à la forme du signal de détection $f(x_k, y_l)$, tel que :

- l'amplitude maximale du signal de détection, c'est-à-dire la valeur maximale de $f(x_k, y_l)$ pour chaque détection,
- le nombre de pixels concernés par chaque détection,
- l'ellipticité e de chaque tache de détection, définie par la formule $e = ABS(A^2 - B^2)/(A^2 + B^2)$, où A et B sont les dimensions de la tache de détection selon ses deux axes principaux, c'est-à-dire selon sa longueur et sa largeur,
- la somme des valeurs du signal de détection $f(x_k, y_l)$ sur l'ensemble de la tache de détection, pour chaque détection,
- la variance de la tache de détection, selon ses deux axes principaux, la variance V selon l'axe principal A s'exprimant par exemple sous la forme :

$$V = \left( \sum_{pixels} f(a,b).(a - \bar{a})^2 \right) / \sum_{pixels} f(a,b) \, ,$$

où a et b sont les coordonnées de chaque pixel concerné par la détection considérée selon les axes principaux A et B, $\bar{a}$ est la valeur moyenne de a pour ces pixels, et $\sigma$ est l'écart-type,
- l'asymétrie de la tâche de détection, selon ses deux axes principaux, l'asymétrie selon l'axe principal A s'exprimant par exemple sous la forme :

$$Ass = \left( \sum_{pixels} f(a,b).(a - \bar{a})^3 / \sigma^3 \right) / \sum_{pixels} f(a,b) \, ,$$

- et l'étroitesse de la tâche de détection, donnée par la formule

$$E = ( \sum_{pixels} f(a,b).(a - \overline{a})^4 / \sigma^4 ) / \sum_{pixels} f(a,b)$$

(on peut également utiliser à la place de l'étroitesse, le coefficient dénommé kurtosis K=E-3).

A titre d'exemple, on peut évaluer pour chaque détection l'amplitude maximale du signal de détection f et l'ellipticité de la tâche de détection.

Ainsi, à chaque détection de rayonnement β, le microordinateur 8 calcule, sensiblement en temps réel :

- les valeurs prises par les critères susmentionnés, valeurs qui sont discrétisées et qui seront appelées ci-après "caractéristiques",
- ainsi que le barycentre de la tache de détection, correspondant au point d'émission estimé du rayonnement β dans le substrat 3, ce ayant pour coordonnées :

$$([\sum_m \sum_n xm. f(xm, yn)] / [\sum_m \sum_n f(xm, yn)], \sum_m \sum_n yn. f(xm, yn)] / [\sum_m \sum_n f(xm, yn)]) .$$

Le microordinateur conserve alors en mémoire, individuellement pour chaque rayonnement détecté, les différentes données ainsi calculées, mais il ne conserve pas forcément en mémoire le signal de détection $f(x_k,y_l)$ afin d'économiser l'espace mémoire.

Lorsque le microordinateur 8 a emmagasiné un nombre suffisant de détection, typiquement plusieurs millions, par exemple environ 3 millions, il dispose d'une distribution statistique $H(x_k,y_l,A1_{j1}, ..Aq_{jq})$, où :

- q est le nombre des critères utilisés,
- $A1_{j1}$ est la valeur (ou caractéristique) prise par le critère n°1, j1 étant compris entre 1 et J1,
  ...
- $Aq_{jq}$ est la valeur (caractéristique) prise par le critère n°q, jq étant compris entre 1 et Jq.

Cette distribution H $(x_k,y_l,A1_{j1},...,Aq_{jq})$ correspond au nombre de détections en chaque point d'émission estimé (barycentre de chaque tache de détection) de coordonnées $(x_k,y_l)$ avec chaque combinaison $A1_{j1},...,Aq_{jq}$ des caractistiques des différents critères.

La distribution H peut s'exprimer sous la forme

$$(I) \quad H(xk, yl, A1j1,.. Aqjq) = \sum_i hi(xk, yl) \otimes Ri, j1,.. jq(x,y) ,$$

où :

$$hi(xk, yl) \otimes Ri, j1,.. jq(x,y) = \sum_m \sum_n hi(xk, yl). Ri, j1,.. jq(xk - xm, yl - yn) ,$$

- i étant un entier compris entre 1 et I, désignant les traceurs radioactifs,
- m étant un indice compris entre 1 et L,
- n étant un indice compris entre 1 et K,
- et $Ri, j1,..jq(x,y)$ étant la réponse impulsionnelle du détecteur pour chaque traceur i et pour chaque combinaison possible des caractéristiques $A1_{j1},...,Aq_{jq}$ des différents critères A1..Aq, cette réponse impulsionnelle correspondant à une probabilité pour que, lorsque le détecteur reçoit un rayonnement provenant d'une source ponctuelle du traceur radioactif i, ledit détecteur génère sur les pixels du champ d'observation ayant les coordonnées relatives (x,y) par rapport à la source ponctuelle, un signal de détection présentant ladite combinaison de caractéristiques (voir l'exemple représenté sur la figure 3), et ladite réponse impulsionnelle étant mesurée dans une étape préliminaire de calibration mise en oeuvre avant la période d'observation du substrat 3 (une fois pour toutes, à intervalle de temps régulier, ou avant chaque nouvelle période d'observation ou série de périodes d'observation).

Au cours de l'étape de calibration, les réponses impulsionnelles peuvent être estimées en effectuant des mesures successives avec des sources ponctuelles des différents traceurs i (par exemple, sources circulaires présentant un diamètre inférieur ou égal à 100 $\mu$m), et en calculant :

$$Ri, j1,.. jq(x, y) = Ni(x, y, A1j1,.. Aqjq) / (\sum_{s1}..\sum_{sq} Ni(x, y, A1s1,.. Aqsq)$$

où $N_i(x,y,A1j1,..Aq_{jq})$ est le nombre de détections au point de coordonnées relatives (x,y) au cours de l'étape de calibration effectuée avec le traceur i et avec la combinaison de caractéristiques $A1_{j1},..,Aq_{iq}$.

A partir de la distribution H, le micro-ordinateur 8 estime des distributions $\widetilde{h} i(xk,yl)$ pour chaque traceur radioactif, correspondant respectivement à l'image de la répartition de ces traceurs dans le substrat 3.

Pour cela, le micro-ordinateur 8 minimise l'écart entre la distribution $H(xk,yl,A1_{j1},..Aq_{jq})$ et une distribution estimée

$$\widetilde{H}(xk, yl, A1j1,.. Aqjq) = \sum_{i} \widetilde{h} i(xk, yl) \otimes Ri, j1,.. jq(x, y) .$$

Pour cela, on peut minimiser une fonction d'erreur Er, par exemple, selon la méthode des moindres carrés :

$$Er = \sum_{j1} \lambda j1..\sum_{jq} \lambda jq \sum_{k} \sum_{l} [H(xk, yl, A1j1,.. Aqjq) - \sum_{i} \widetilde{h} i(xk, yl) \otimes Ri, j1,.. jq(x, y)]^2 ,$$

où $\lambda_{j1}..\lambda_{jq}$ sont des indices de pondération, pouvant être le cas échéant tous égaux à 1.

Cette minimisation peut se faire par un calcul direct, ou par des algorithmes classiques d'analyse numérique, en partant d'une valeur arbitraire des distributions $\widetilde{h} i(xk, yl)$.

Ainsi, on obtient des distributions estimées $\widetilde{h} i(xk,yl)$ qui sont très proches des distributions réelles $h_i(x_k,y_l)$, de sorte que l'on obtient des images de très bonne résolution donnant respectivement la cartographie des traceurs i dans le substrat 3.

On notera que le procédé selon l'invention est également applicable pour éliminer le bruit de fond radioactif, en considérant ce bruit de fond comme un traceur radioactif fictif.

De même, lorsque le détecteur 1 comporte des défauts ponctuels, généralement appelés "points chauds" dans les détecteurs gazeux, on peut également éliminer l'effet de ces points chauds ou autres défauts en les considérant comme des traceurs fictifs.

Enfin, le procédé selon l'invention peut être mis en oeuvre sous une forme simplifiée, en ne prenant en compte les réponses impulsionnelles que pour (x,y)=(0,0), auquel cas l'équation I susmentionnée se simplifie et devient : (Ibis)

$$H(xk, yl, A1j1,.. Aqjq) = \sum_{i} hi(xk, yl). Ri, j1,.. jq ,$$

le procédé étant par ailleurs mis en oeuvre de la même façon qu'expliqué précédemment.

La présente invention n'est pas limitée à l'exemple particulier qui vient d'être décrit. En particulier, elle englobe le cas où on réaliserait des mesures analogiques sur l'image, ce qui reviendrait à augmenter à l'infini le nombre de pixels : dans ce cas, les sommes discrètes explicitées ci-dessus sur les axes x et y pourraient être présentées sous la forme d'intégrales continues.

**Revendications**

1. Procédé pour générer au moins une image d'un substrat (3) à partir de rayonnements radioactifs provenant d'un nombre I au moins égal à 2 de sources radioactives, ces sources radioactives comprenant au moins un traceur radioactif contenu dans le substrat, ce procédé comprenant les étapes suivantes :

    a) on détecte les rayonnements radioactifs issus du substrat dans un certain champ d'observation (6) subdivisé en $K \times L$ pixels, au moyen d'un détecteur (1) qui génère pour chaque pixel $(x_k, y_l)$ du champ d'observation un signal de détection $f(x_k, y_l)$ représentatif de la détection ou non d'un rayonnement radioactif en ce pixel,

    b) et on mémorise des données représentatives des différents signaux de détection générés par le détecteur (1), individuellement pour chaque rayonnement radioactif détecté pendant une durée déterminée dite période d'observation, ces données mémorisées permettant de connaître au moins une position estimée d'un point d'émission du rayonnement radioactif dans le substrat,

    les données mémorisées pendant la période d'observation permettant en outre de connaître, en plus de la position estimée $(x_k, y_l)$ du point d'émission du rayonnement, un nombre q au moins égal à 1 de paramètres numériques supplémentaires A1..Aq relatifs aux signaux de détection.générés par chaque détection de rayonnement radioactif, chacun de ces paramètres, dits "critères", pouvant prendre un nombre non nul de valeurs $A1_1..A1_{J1}, .., Aq_1..Aq_{Jq}$, dites "caractéristiques",

    avant la période d'observation, on met en oeuvre une étape préliminaire de calibration, dans laquelle on mesure une réponse impulsionnelle $Ri,j1,..jq(x,y)$ du détecteur pour chaque source radioactive i et pour chaque combinaison possible des caractéristiques $A1_{j1},..,Aq_{jq}$ des différents critères A1..Aq, cette réponse impulsionnelle correspondant à une probabilité pour que, lorsque le détecteur reçoit un rayonnement provenant d'une source ponctuelle de la source radioactive susmentionnée, ledit détecteur génère sur les pixels du champ d'observation ayant les coordonnées relatives (x,y) par rapport à la source ponctuelle, un signal de détection présentant ladite combinaison de caractéristiques,

    ledit procédé comportant les étapes supplémentaires suivantes :

    c) à partir de l'ensemble des données mémorisées, déterminer une distribution $H(x_k, y_l, A1_{j1},..,Aq_{jq})$ des détections correspondant à ces données, correspondant au nombre de détections en chaque point d'émission estimé de coordonnées $(x_k, y_l)$ avec chaque combinaison $A1_{j1},..,Aq_{jq}$ des caractéristiques des différents critères,

    d) et estimer une distribution $\tilde{h}i(xk, yl)$ des détections correspondant à chaque source radioactive i, qui minimise les écarts respectifs entre la distribution $H(x_k, y_l, A_{j1},..,A_{jq})$ et les valeurs correspondantes :

$$\tilde{H}(xk, yl, A1j1,.. Aqjq) = \sum_i \tilde{h}i(xk, yl) \otimes Ri, j1,.. jq(x, y) \,,$$

où :

$$\tilde{h}i(xk, yl) \otimes Ri, j1,.. jq(x, y) = \sum_m \sum_n \tilde{h}i(xk, yl). Ri, j1,.. jq(xk - xm, yl - yn) \,,$$

    - i étant un entier compris entre 1 et I, désignant la source radioactive considérée,
    - j1 étant un entier compris entre 1 et J1, désignant la j1ème caractéristique possible pour le critère n°1,
    ...
    - jq étant un entier compris entre 1 et Jq, désignant la jqème caractéristique possible pour le critère n°q,
    - m étant un indice compris entre 1 et L,
    - n étant un indice compris entre 1 et K,

    les distributions $\tilde{h}i(xk, yl)$ correspondant, pour chaque source radioactive i constituée par un traceur contenu dans le substrat, à l'image de la répartition de ce traceur dans ledit substrat.

2. Procédé selon la revendication 1, dans lequel les sources radioactives comprennent plusieurs traceurs, auxquels correspondent autant de distributions $\tilde{h}i(xk, yl)$, formant chacune l'image de la répartition d'un desdits traceurs dans le substrat.

3. Procédé selon la revendication 1 ou la revendication 2, dans lequel une des sources radioactives est un bruit de fond.

4. Procédé selon l'une quelconque des revendications précédentes, dans lequel au moins une des sources radioactives est une source fictive correspondant à au moins un défaut du détecteur.

5. Procédé selon la revendication 4, dans lequel le détecteur (1) est un détecteur gazeux dans lequel les rayonnement β génèrent des avalanches d'électrons à l'origine du signal de détection, et ledit détecteur comportant des points chauds constitués par des points en lesquels sont générées des avalanches d'électrons sans détection de rayonnement β, ces points chauds constituant la source fictive susmentionnée.

6. Procédé selon l'une quelconque des revendications précédentes, dans lequel on estime chaque distribution $\widetilde{h}\,i$ ($xk,yl$) en minimisant une fonction d'erreur Er définie par :

$$Er = \sum_{j1} \lambda j1.. \sum_{jq} \lambda jq \sum_{k} \sum_{l} [H(xk, yl, A1j1,.. Aqjq) - \sum_{i} \widetilde{h}\,i(xk, yl) \otimes Ri, j1,.. jq(x, y)]^2 \ ,$$

où $\lambda_{j1}...\lambda_{jq}$ sont des indices de pondération.

7. Procédé selon la revendication 6, dans lequel les indices $\lambda_{j1}..\lambda_{jq}$ sont tous égaux à 1.

8. Procédé selon l'une quelconque des revendications précédentes, dans lequel au moins un des critères est choisi parmi :

   - l'amplitude maximale du signal de détection, pour chaque détection,
   - le nombre de pixels concernés par chaque détection, ces pixels formant un ensemble appelé ci-après "tache de détection",
   - l'ellipticité de la tache de détection,
   - la somme des valeurs du signal de détection sur la tache de détection,
   - la variance de la tache de détection
   - l'étroitesse de la tache de détection,
   - l'asymétrie de la tache de détection.

9. Procédé selon l'une quelconque des revendications précédentes, dans lequel le point d'émission estimé de chaque détection est le barycentre des pixels concernés par cette détection, de coordonnées :

$$\left( \left[ \sum_{m} \sum_{n} xm.f(xm, yn) \right] / \left[ \sum_{m} \sum_{n} f(xm, yn) \right], \left[ \sum_{m} \sum_{n} yn.f(xm, yn) \right] / \left[ \sum_{m} \sum_{n} f(xm, yn) \right] \right) .$$

10. Procédé selon l'une quelconque des revendications précédentes, dans lequel les réponses impulsionnelles $Ri, j1,..jq(x,y)$ prises en compte sont nulles sauf lorsque $(x,y)=(0,0)$.

11. Procédé selon la revendication 1, dans lequel le nombre q de paramètres numériques supplémentaires est 1, le paramètre numérique supplémentaire A1 étant relatif à la somme des valeurs du signal de détection sur les pixels concernés par chaque détection, et dans lequel les écarts respectifs entre la distribution $H(x_k, y_1, A1_{j1})$ et les valeurs correspondantes

$$\widetilde{H}(xl, yl, A1j1) = \sum_{i} \widetilde{h}\,i(xk, yl) * Ri, j1$$

sont minimisés.

**12.** Précédé selon la revendication 11, dans lequel on estime chaque distribution $\widetilde{h}\,i(xk,yl)$ en minimisant une fonction d'erreur Er définie par :

$$Er = \sum_{j1}\sum_{k}\sum_{l}[H(x_k, y_l, A1_{j1}) - \sum_{i}\widetilde{h}\,i(x_k, y_l) * R_{i,j1}]^2 \; .$$

**Patentansprüche**

**1.** Verfahren zur Erzeugung mindestens eines Bilds eines Substrats (3) ausgehend von radioaktiven Strahlen, die von einer Anzahl I von mindestens gleich 2 von radioaktiven Quellen kommen, die mindestens einen in dem Substrat enthaltenen Tracer aufweisen, wobei dieses Verfahren die folgenden Schritte umfasst:

a) man erfasst die von dem Substrat kommenden radioaktiven Strahlen in einem gewissen Beobachtungsfeld (6), das in K x L Pixel unterteilt ist, mit Hilfe eines Detektors (1), der für jedes Pixel $(x_k, y_l)$ des Beobachtungsfelds ein Erfassungssignal $f(x_k, y_l)$ erzeugt, das die Erfassung einer radioaktiven Strahlung oder nicht in diesem Pixel darstellt,

b) und man speichert Daten, die die verschiedenen von dem Detektor (1) erzeugten Erfassungssignale darstellen, einzeln für jede radioaktive Strahlung, die während einer bestimmten Zeit, Beobachtungsperiode genannt, erfasst wurde, wobei diese gespeicherten Daten gestatten, mindestens eine geschätzte Lage eines Emissionspunkts der radioaktiven Strahlung in dem Substrat zu kennen,

wobei die während der Beobachtungsperiode gespeicherten Daten außerdem gestatten, zusätzlich zur geschätzten Lage $(x_k, y_l)$ des Emissionspunkts der Strahlung eine Anzahl q von mindestens gleich 1 von zusätzlichen numerischen Parametern Al..Aq zu kennen, die sich auf die durch jede Erfassung von radioaktiver Strahlung erzeugten Signale beziehen, wobei jeder dieser Parameter, "Kriterien" genannt, eine Anzahl von nicht null von Werten $A1_1..A1_{J1}$, .., $Aq_1..Aq_{Jq}$, "Merkmale" genannt, annehmen kann,

vor der Beobachtungsperiode führt man einen vorhergehenden Kalibrierungsschritt aus, in dem eine Impulsantwort $Ri, j1,..jq(x,y)$ des Detektors für jede radioaktive Quelle i und für jede mögliche Kombination der Merkmale $A1_{j1},..Aq_{jq}$ der verschiedenen Kriterien Al..Aq gemessen wird, wobei diese Impulsantwort einer Wahrscheinlichkeit entspricht, dass, wenn der Detektor eine von einer punktförmigen Quelle der genannten radioaktiven Quelle kommende Strahlung empfängt, der Detektor auf den Pixel des Beobachtungsfelds mit den relativen Koordinaten (x,y) bezüglich der punktförmigen Quelle ein Erfassungssignal erzeugt, das diese Kombination von Merkmalen aufweist,

wobei dieses Verfahren die folgenden zusätzlichen Schritte umfasst:

c) aus der Einheit der gespeicherten Daten eine Verteilung $H(x_k,y_l,A1_{j1},..Aq_{jq})$ der diesen Daten entsprechenden Erfassungen bestimmen, die der Anzahl von Erfassungen an jedem geschätzten Emissionspunkt von Koordinaten $(x_k,y_l)$ mit jeder Kombination $A1_{j1},..,Aq_{jq}$ der Merkmale der einzelnen Kriterien entspricht,

d) und eine Verteilung $\widetilde{h}\,i(xk,yl)$ der jeder radioaktiven Quelle i entsprechenden Erfassungen schätzen, die die jeweiligen Abweichungen zwischen der Verteilung $H(x_k,y_l,A_{j1},..,A_{jq})$ und den entsprechenden Werten

$$\widetilde{H}(xk,yl,A1j1,..Aqjq) = \sum_{i}\widetilde{h}\,i(xk,yl) \otimes Ri, j1,..jq(x,y) \; \text{minimiert,}$$

worin:

$$\widetilde{h}\,i(xk,yl) \otimes Ri, j1,..jq(x,y) = \sum_{m}\sum_{n}\widetilde{h}\,i(xk,yl). Ri, j1,..jq(xk - xm, yl - yn) \; ,$$

worin

- i eine ganze Zahl zwischen 1 und I ist, die die betreffende radioaktive Quelle bezeichnet,
- j1 eine ganze Zahl zwischen 1 und J1 ist, die das j1-te mögliche Merkmal für das Kriterium Nr. 1 bezeichnet,

- jq eine ganze Zahl zwischen 1 und Jq ist, die das jq-te mögliche Merkmal für das Kriterium Nr. q bezeichnet,
- m ein Index zwischen 1 und L ist,
- n ein Index zwischen 1 und K ist,

wobei die Verteilungen $\widetilde{h}\,i(xk,yl)$ bei jeder radioaktiven Quelle, die aus einem im Substrat enthaltenen Tracer besteht, dem Bild der Verteilung dieses Tracers in diesem Substrat entspricht.

2. Verfahren nach Anspruch 1, bei dem die radioaktiven Quellen mehrere Tracer aufweisen, denen ebensoviele Verteilungen $\widetilde{h}\,i(xk,yl)$ entsprechen, die jeweils das Bild der Verteilung eines dieser Tracer im Substrat bilden.

3. Verfahren nach Anspruch 1 oder Anspruch 2, bei dem eine der radioaktiven Quellen ein Grundgeräusch ist.

4. Verfahren nach einem der vorhergehenden Ansprüche, bei dem mindestens eine der radioaktiven Quellen eine fiktive Quelle ist, die mindestens einem Fehler des Detektors entspricht.

5. Verfahren nach Anspruch 4, bei dem der Detektor (1) ein gasförmiger Detektor ist, in dem die β-Strahlen Elektronenlawinen am Ursprung des Erfassungssignals erzeugen, wobei dieser Detektor heiße Punkte aufweist, die von Punkten gebildet sind, an denen Elektronenlawinen ohne Erfassung von β-Strahlung erzeugt werden, wobei diese heißen Punkte die genannte fiktive Quelle bilden.

6. Verfahren nach einem der vorhergehenden Ansprüche, bei dem man jede Verteilung $\widetilde{h}\,i(xk,yl)$ schätzt, indem man eine Fehlerfunktion Er minimiert, die definiert ist durch:

$$Er = \sum_{jl}\lambda jl\,...\,\sum_{jq}\lambda jq\sum_{k}\sum_{l}\left[\,H(xk,yl,A1j1,...Aqjq)-\sum_{i}\overline{h}\,i(xk,yl)\otimes Ri,j1,..jq(x,y)\right]^2$$

worin $\lambda_{j1}..\lambda_{jq}$ Gewichtungsindizes sind.

7. Verfahren nach Anspruch 6, bei dem die Indizes $\lambda_{j1}..\lambda_{jq}$ alle gleich 1 sind.

8. Verfahren nach einem der vorhergehenden Ansprüche, bei dem mindestens eines der Kriterien ausgewählt wird aus:

- maximale Amplitude des Erfassungssignals bei jeder Erfassung,
- Anzahl von von jeder Erfassung betroffenen Pixel, wobei diese Pixel eine Einheit bilden, die im nachstehenden "Erfassungsfleck" genannt wird,
- Elliptizität des Erfassungsflecks,
- Summe der Werte des Erfassungssignals auf dem Erfassungsfleck,
- Varianz des Erfassungsflecks,
- Enge des Erfassungsflecks,
- Asymmetrie des Erfassungsflecks.

9. Verfahren nach einem der vorhergehenden Ansprüche, bei dem der geschätzte Emissionspunkt jeder Erfassung der Schwerpunkt der von dieser Erfassung betroffenen Pixel mit den Koordinaten

$$\left(\left[\sum_{m}\sum_{n}xm.f(xm,yn)\right]/\left[\sum_{m}\sum_{n}f(xm,yn)\right],\sum_{m}\sum_{n}yn.f(xm,yn)\right]/\left[\sum_{m}\sum_{n}f(xm,yn)\right]\right).$$

ist.

10. Verfahren nach einem der vorhergehenden Ansprüche, bei dem die berücksichtigten Impulsantworten $Ri,j1,..jk(x,y)$ null sind, außer wenn $(x,y)=(0,0)$.

**11.** Verfahren nach Anspruch 1, bei dem die Anzahl q von zusätzlichen numerischen Parametern 1 ist, wobei der zusätzliche numerische Parameter A1 sich auf die Summe der Werte des Erfassungssignals auf den von jeder Erfassung betroffenen Pixel bezieht, und bei dem die jeweiligen Abweichungen zwischen der Verteilung $H(x_k, y_1, A1_{j1})$ und den entsprechenden Werten

$$\widetilde{H}(x_k, y_l, A1_{j1}) = \sum \widetilde{h}_i(x_k, y_l) * R_{i,j1}$$

minimiert sind.

**12.** Verfahren nach Anspruch 11, bei dem man jede Verteilung $\widetilde{h}_i(xk, yl)$ schätzt, indem man eine Fehlerfunktion Er minimiert, die definiert wird durch:

$$Er = \sum_{j1} \sum_{k} \sum_{l} [H(x_k, y_l, A1_{j1}) - \sum_i \widetilde{h}_i(x_k, y_l) * R_{i,j1}]^2 .$$

**Claims**

**1.** Method of generating at least one image of a substrate (3) from radioactive radiation coming from a number I at least equal to 2 of radioactive sources, these radioactive sources comprising at least one radioactive tracer contained in the substrate, this method comprising the following stages:

a. the radioactive radiation coming from the substrate is detected in a certain observation field (6) sub-divided into K x L pixels, by means of a detector (1) which generates for each pixel $(x_k, y_l)$ of the observation field a detection signal f $(x_k, y_l)$ representing the detection or non-detection of a radioactive radiation in this pixel,

b. and data representing different detection signals generated by the detector (1) are memorised, individually for each radioactive emission detected during a determined period called the observation period, these memorised data enabling to obtain at least to an estimated position of an emission point of the radioactive radiation in the substrate,

the data memorised during the observation period further enabling to obtain, in addition to the estimated position $(x_k, y_l)$ of the emission point of the radiation, a number q at least equal to 1 of supplementary numerical parameters Al...Aq relative to the detection signals generated by each detection of radioactive radiation, each of these parameters, called "criteria", being able to take a non-zero number of values $Al_1...Al_{J1},...Aq_1...Aq_{Jq}$, termed "characteristics",

before the observation period, a preliminary calibration stage is implemented in which an impulse response Ri,jl,.jq(x,y) of the detector is measured for each radioactive source i and for each possible combination of the characteristics $Al_{jl},..,Aq_{jq}$ of the different criteria Al....Aq, this impulse response corresponding to a probability that, when the detector receives radiation coming from a point source of the aforementioned radioactive source, said detector generates on the pixels of the observation field having the relative coordinates (x,y) in relation to the point source, a detection signal presenting said combination of characteristics,

said method comprising the following supplementary stages:

c. from the set of memorised data, determining a distribution $H(x_k, yl, Al_{j1}...,Aq_{jq})$ of the detections corresponding to these data, corresponding to the number of detections at each estimated emission point of coordinates $(x_k, y_l)$ with each combination $Al_{jl},..,Aq_{jq}$ of the characteristics of the different criteria,

d. and estimating a distribution $\widetilde{h}_i(x_k, y_l)$ of detections corresponding to each radioactive source i, which minimises the respective deviations between the distribution $H(x_k, y_l, A_{jl},..A_{jq})$ and the corresponding values:

$$H(x_k, y_l, A1_{jl},...Aq_{jq}) = \Sigma_i\, \hbar_i(x_k, y_l) \otimes Ri, j_1....j_q(x, y),$$

where:

$$\hbar_i(x_k,y_l) \otimes Ri,j_1,..j_q(x,y) = \sum_m \sum_n \hbar_i(x_k,y_l)Ri,j_1..j_q(x_k-x_m,y_l-y_n),$$

- i being an integer between 1 and I referring to the radioactive source being considered,
- jl being an integer between 1 and $J_l$ referring to the $j_l^{st}$ characteristic possible for the criterion no. 1,
- $j_q$ being an integer between 1 and Jq referring to the $j_q^{th}$ characteristic possible for the criterion no. q,
- m being an index between 1 and L,
- n being an index between 1 and K,

the distributions $\widetilde{h}_i(x_k,y_l)$ corresponding, for each radioactive source i constituted by a tracer contained in the substrate, to the image of the distribution of this tracer in said substrate.

2. Method according to claim 1, in which the radioactive sources comprise a plurality of tracers, to which correspond as many distributions $\widetilde{h}_i(x_k,y_l)$, each forming the image of the distribution of one of said tracers in the substrate.

3. Method according to claim 1 or claim 2, in which one of the radioactive sources is a background radiation.

4. Method according to any of the preceding claims, in which at least one of the radioactive sources is an imaginary source corresponding to at least one defect of the detector.

5. Method according to claim 4, in which the detector (1) is a gas detector in which the beta radiation generates electron avalanches on the basis of the detection signal, and said detector comprising hot spots constituted by spots at which electron avalanches are generated without detection of beta radiation, these hot spots constituting the abovementioned imaginary source.

6. Method according to any of the preceding claims, in which each distribution $\widetilde{h}_i(x_k,y_l)$ is estimated minimising an error function Er defined by:

$$Er = \sum_{jl} \lambda jl \dots \sum_{jq} \lambda jq \sum_k \sum_l \left[ H(xk, yl, A1j1,...Aqjq) - \sum_i \overline{h}i(xk, yl) \otimes Ri, j1,..jq(x,y) \right]^2$$

where $\lambda jl..\lambda jq$ are weighting indices.

7. Method according to claim 6, in which the indices $\lambda jl...\lambda jq$ are all equal to 1.

8. Method according to any of the preceding claims, in which at least one of the criteria is chosen from:

- the maximum amplitude of the detection signal, for each detection,
- the number of pixels affected by each detection, these pixels forming a set which is called hereinafter "detection spot",
- the ellipticity of the detection spot,
- the sum of the values of the detection signal on the detection spot,
- the variance of the detection spot,
- the narrowness of the detection spot,
- the asymmetry of the detection spot.

9. Method according to any of the preceding claims, in which the estimated emission point of each detection is the barycentre of the pixels affected by this detection, of coordinates:

$$\left( \left[ \sum_m \sum_n xm.f(xm, yn) \right] \bigg/ \left[ \sum_n \sum_m f(xm, yn) \right], \left[ \sum_m \sum_n yn.f(xm, yn) \right] \bigg/ \left[ \sum_m \sum_n f(xm, yn) \right] \right).$$

10. Method according to anyone of the preceding claims, in which the impulse responses $Ri,j1,...jq(x,y)$ taken into account are zero apart from when (x,y) = (0,0).

11. Method according to claim 1, in which the number q of supplementary numerical parameters is 1, the supplementary numerical parameter A1 being related to the sum of the values of the detection signal on the pixels concerned by each detection, and in which the respective deviations between the distribution $H(x_k,y_l,A1_{j1})$ and the corresponding values

$$H(x_k,y_l,A1_{j1}) = \sum_i \bar{h}i(xk, yl).Ri,$$

$j1$ are minimised.

12. Method according to claim 11, wherein each distribution $\widetilde{h}i(xk,yl)$ is estimated by minimizing an error function defined by :

$$Er = \sum_{j1} \sum_k \sum_l \left[ H(xk, yl, A1j1) - \sum_i \bar{h}i(xk, yl).Ri, j1 \right]^2$$

## FIG.1.

## FIG.2.

## FIG.3.